# EUROPÄISCHE PATENTANMELDUNG

(11) **EP 3 917 107 A1**
(43) Veröffentlichungstag der Anmeldung: **01.12.2021**
(21) Anmeldenummer: 21171408.4
(22) Anmeldetag: 30.04.2021
(51) Int. Cl.: H04L 29/06, H04W 12/50, H04W 12/037, H04W 12/06, H04W 84/12

(54) **DATENÜBERTRAGUNG ZU WLAN-FÄHIGEN HAUSHALTSGERÄTEN**

(30) Priorität: 29.05.2020 DE 102020114415
(71) Anmelder: Miele & Cie. KG, 33332 Gütersloh (DE)
(72) Erfinder: Langhammer, Nils, 33415 Verl (DE)

(57) **Zusammenfassung**

Die Erfindung betrifft ein Verfahren zur direkten Datenübertragung zu WLAN-fähigen Geräten, umfassend Kodieren von zu übertragenden Nutzdaten in einem auf 2 Bit basierenden Format, Erzeugen von je einem UDP-Datenpaket pro 2 Bit der kodierten Daten, wobei die UDP-Datenpakete eine QoS-Anforderung aufweisen, deren 2 Bit entsprechend der kodierten 2 Bit gesetzt werden, und Senden der erzeugten UDP-Datenpakete über eine WLAN-Schnittstelle. Die Erfindung betrifft weiter ein entsprechendes Verfahren zum Empfangen von Daten in einem WLAN-fähigen Gerät, umfassend Empfangen von Datenpaketen über eine WLAN-Schnittstelle, die eine QoS-Anforderung aufweisen, und Erzeugen von Nutzdaten durch Zusammensetzen der 2 Bit der QoS-Anforderungen der Datenpakete und Dekodieren der zusammengesetzten Daten.

## Beschreibung

Die Erfindung betrifft die Datenübertragung zu WLAN-fähigen Haushaltsgeräten, insbesondere von mobilen Endgeräten zu Haushaltsgeräten, die noch nicht in ein WLAN-Netzwerk eingebunden wurden.

Es gibt verschiedene bekannte Methoden der Datenübertragung mittels WLAN. Eine technische Möglichkeit ist das so genannte WiFi-Direct-Verfahren. Dabei werden unter Verwendung niedriger Schichten des WLAN-Protokolls Daten zwischen zwei WLAN-fähigen Endgeräten ausgetauscht. WiFi-Direct ist jedoch nur auf manchen Betriebssystemen verfügbar, z.B. auf dem Betriebssystem Android, kann aber etwa unter iOS nicht genutzt werden.

Ein weiteres Verfahren ist das so genannte "SmartConfig" der Firma Texas Instruments. Dieses nutzt die Tatsache aus, dass die aus einem UDP-Datenpaket resultierende Paketlänge des übertragenen WLAN-Paketes aufgrund der verwendeten Verschlüsselung vorhersagbar ist. Dadurch schickt die mit einem WLAN-Netzwerk verbundene Smartphone-App gezielt UDP-Nachrichten an den Access Point, mit dem das Smartphone verbunden ist. Diese UDP-Nachrichten haben keinen Nutz-Inhalt, sondern sie werden so gebildet, dass die übertragenen Pakete auf dem WLAN-Kanal eine bestimmte Länge haben. Dadurch werden über die Länge der Pakete Daten übertragen. Werden beispielsweise 3 Pakete mit 15
Byte, 10 Byte und 8 Byte übertragen, so entsprechen die übertragenen Daten 0x0F, 0x0A, 0x08. Über diesen Mechanismus wird bei "SmartConfig" der WLAN-Schlüssel einem noch nicht eingebundenen Gerät übertragen, das mit dem gleichen Netzwerk verbunden werden soll.

Dieses Verfahren ist geschützt und darf nur mit Chipsätzen von Texas Instruments verwendet werden. Es kann daher nicht ohne Weiteres und auch nicht auf Chipsätzen, die nicht von Texas Instruments stammen, verwendet werden.

Ein anderes bekanntes Verfahren zur Übertragung von Einstellungen, wie etwa WLAN-Zugangsdaten, an WLAN-fähige, aber noch nicht in ein Netzwerk eingebundene Geräte ist die Verwendung eines Soft-Access-Points. Dabei wird von dem einzustellenden Gerät ein Access Point erstellt, mit dem sich ein Endgerät eines Benutzers zur Übertragung verbinden muss. Nach Herstellen der Verbindung können Einstellungen über die Verbindung übertragen werden. Eine unverschlüsselte Verbindung ist hier möglich, aus Sicherheitsgründen aber nicht zu empfehlen. Dies ist relativ unkomfortabel, sofern die Verbindung verschlüsselt ist, da das Passwort auf dem Endgerät üblicherweise manuell eingegeben werden muss. Es ist somit nicht oder nur schwer zu automatisieren.

Da aufgrund der manuellen Eingabenotwendigkeit auch bei verschlüsselter Verbindung häufig von den Herstellern der mit dem WLAN zu verbindenden Geräte nur sehr einfache, kurze und/oder ableitbare Passwörter für den Soft-AP verwendet werden (etwa Seriennummern, Gerätenamen oder Standardpasswörter), ist die Sicherheit hiervon gering. Es besteht die Gefahr, dass Passwörter und andere sensible Einstellungsdaten von Unbefugten bei der Übertragung an das Gerät ausgelesen werden, wenn das Passwort für den Soft-AP leicht zu ermitteln ist.

Der Erfindung stellt sich somit das Problem, eine Datenübertragungsmöglichkeit bereitzustellen, mit der insbesondere noch nicht mit einem WLAN-Netzwerk verbundenen WLAN-fähigen Geräten Daten, etwa WLAN-Zugangsdaten, auf eine sichere und komfortable Art übertragen werden können. Die Datenübertragung soll ferner unabhängig vom WLAN-Chipsatz und Betriebssystem eines Endgeräts einsetzbar sein.

Erfindungsgemäß wird dieses Problem durch ein Verfahren und ein Haushaltsgerät gemäß den unabhängigen Ansprüchen gelöst. Vorteilhafte Ausgestaltungen und Weiterbildungen der Erfindung ergeben sich aus den nachfolgenden Unteransprüchen.

Gemäß einem ersten Aspekt wird ein Verfahren zur direkten Datenübertragung zu WLAN-fähigen Geräten bereitgestellt, umfassend:
- Kodieren von zu übertragenden Nutzdaten in einem auf 2 Bit basierenden Format;
- Erzeugen von je einem UDP-Datenpaket pro 2 Bit der kodierten Daten, wobei die UDP-Datenpakete eine QoS-Anforderung aufweisen, deren 2 Bit entsprechend der kodierten 2 Bit gesetzt werden; und
- Senden der erzeugten UDP-Datenpakete über eine WLAN-Schnittstelle.

Das Verfahren nutzt das 2-bittige QoS-Datenfeld zur Übertragung von Nutzdaten. Dieser Teil von WLAN-Paketen kann von jedem WLAN-fähigen Endgerät (das dem Standard 802.11e entspricht) entsprechend gesetzt werden, unabhängig von Betriebssystem und WLAN-Chipsatz. Durch Aufsplittung der Nutzdaten in ein 2 Bit-Format können so grundsätzlich beliebige Mengen an Daten übertragen werden.

Der Inhalt der Datenpakete ist dabei nicht relevant, diese können leer oder mit beispielsweise zufälligen Fülldaten aufgefüllt sein. Wichtig ist, dass das QoS-Feld entsprechend den zu übertragenden Nutzdaten modifiziert wird. Aus diesem Grund muss hierbei das UDP-Protokoll eingesetzt werden, da nur dadurch sichergestellt ist, dass ein Paket auf Applikationsebene in exakt ein Paket im WLAN-Protokoll abgebildet wird. Dies ist beispielsweise bei TCP nicht möglich.

Gemäß einer Ausführungsform umfasst der Schritt des Kodierens ein Verschlüsseln der Nutzdaten.

Da die im QoS-Feld enthaltenen Informationen unverschlüsselt sind, muss zum Schutz der dadurch übertragenen Daten ein Schutz vorab erfolgen. Es ist möglich, übergeordnete Protokolle zu verwenden, um zum Beispiel die Daten gezielt zu strukturieren oder mit einer Verschlüsselung zu versehen.

Gemäß einer Ausführungsform enthalten die zu übertragenden Nutzdaten eines oder mehrere der folgenden:
- eine definierte Präambel;
- eine definierte Postambel; und
- einen Prüfcode.

Prä- und/oder Postambel können dazu dienen, in dem gesendeten Datenstrom Anfang und Ende von zu übertragenden Nutzdaten oder Nutzdaten-Blöcken zu erkennen. Der Prüfcode kann zur Verifizierung der Korrektheit der Daten und/oder zum Korrigieren von Datenfehlern verwendet werden, die etwa durch verfälschte oder verpasste WLAN-Datenpakete auftreten. Alternativ zur Postambel könnte auch eine Länge der Nutzdaten oder des Nutzdaten-Blocks enthalten sein, mit der das Ende der Nutzdatenübertragung seitens des Empfängers bestimmt werden kann.

Hiermit kann eine Datenblock-Struktur für die Nutzdaten erzeugt werden. Der Empfänger wird damit in die Lage versetzt, die Nutzdaten-Blöcke wieder zusammenzusetzen. Der Prüfcode kann dabei beispielsweise auch eine Nummer eines Nutzdaten-Blocks sein oder enthalten. Datenpakete können so redundant mehrfach gesendet werden, um die Wahrscheinlichkeit eines fehlerfreien Empfangs zu erhöhen. Aufgrund der Nummer kann der Empfänger unabhängig von der Reihenfolge und Anzahl der Wiederholungen die Nutzdaten-Blöcke in richtiger Reihenfolge und Zahl verarbeiten. Die Nummer kann alternativ auch in der Prä- und/oder Postambel angeordnet werden.

Gemäß einer Ausführungsform umfassen die zu übertragenden Nutzdaten einen WLAN-Zugangsschlüssel.

Das erfindungsgemäße Verfahren kann grundsätzlich für beliebige Nutzdaten verwendet werden. Eine besonders bevorzugte Variante ist die Übertragung von Zugangsdaten zu einem WLAN-Netzwerk an Geräte, die noch nicht mit diesem WLAN-Netzwerk verbunden sind.

Gemäß einer Ausführungsform ist in den Nutzdaten eine Kennung eines Access-Points enthalten.

Der dem WLAN-Zugangsschlüssel zugehörige Access-Point bzw. dessen Bezeichnung kann in den Nutzdaten enthalten sein.

Gemäß einem weiteren Aspekt wird ein Verfahren zum Empfangen von Daten in einem WLAN-fähigen Gerät bereitgestellt, umfassend:
- Empfangen von Datenpaketen über eine WLAN-Schnittstelle, die eine QoS-Anforderung aufweisen; und
- Erzeugen von Nutzdaten durch Zusammensetzen der 2 Bit der QoS-Anforderungen der Datenpakete und Dekodieren der zusammengesetzten Daten.

Ein WLAN-fähiges Gerät, insbesondere Haushaltsgerät, kann durch passives "Zuhören" und Beobachtung des QoS-Feldes die in den QoS-Informationen abgebildeten ursprünglichen Nutzdaten dekodieren. Dies ist nur möglich, wenn sich das aussendende Gerät und das Haushaltsgerät in räumlicher Nähe befinden, die einen direkten Empfang der entsprechenden WLAN-Datenpakete ermöglicht.

Da der Empfänger noch nicht im WLAN-Netz eingebucht ist, kann er nicht wie normalerweise an der ihm zugewiesenen Empfänger-IP-Adresse in den Datenpaketen erkennen, dass er der Empfänger eines bestimmten Datenpakets ist. Der Empfänger muss daher prinzipiell auf alle gesendeten Datenpakete lauschen und kann erst durch entsprechendes Dekodieren bestimmen, ob ein Datenpaket für ihn bestimmt ist. Ein sich schnell / häufig änderndes QOS-Feld des gleichen Senders kann ein Indiz dafür sein, wohingegen ein Datenstrom mit lange gleichbleibendem QOS-Feld des gleichen Senders nicht für den Empfänger bestimmt sein wird. Das Zuordnen der Datenpakete zu einem bestimmten Sender kann seitens des Empfängers beispielsweise mittels der eindeutigen MAC-Adresse erfolgen. Wenn beispielsweise ein Datenpaket durch einen WLAN-Repeater wiederholt wird, so ist dies durch dessen abweichende MAC-Adresse erkennbar. Die 802.11 "Sequence Number" kann zusätzlich oder unabhängig davon verwendet werden, um Duplikate zu erkennen.

Gemäß einer Ausführungsform umfasst das Dekodieren ein Entschlüsseln der zusammengesetzten Daten.

Gemäß einer Ausführungsform enthalten die empfangenen Daten eines oder mehrere der folgenden:
- eine Präambel;
- eine Postambel; und
- einen Prüfcode;
wobei beim Zusammensetzen und/oder Dekodieren die Präambel, Postambel oder der Prüfcode berücksichtigt werden.

Gemäß einer Ausführungsform umfassen die Nutzdaten einen WLAN-Zugangsschlüssel, weiter umfassend:
- Herstellen einer WLAN-Verbindung des Haushaltsgeräts mit einem Access-Point unter Verwendung des WLAN-Zugangsschlüssels.

Gemäß einer Ausführungsform umfassen die Nutzdaten oder der Inhalt von einem oder mehreren empfangenen Datenpaketen eine Kennung eines Access-Points, wobei die WLAN-Verbindung mit dem Access-Point hergestellt wird, der durch die Kennung angegeben wird. Der zugehörige Access-Point bzw. dessen Bezeichnung kann in den Nutzdaten enthalten sein.

Gemäß noch einem weiteren Aspekt wird ein Gerät bereitgestellt, umfassend eine WLAN-Schnittstelle und eine Steuereinheit, die dazu eingerichtet ist, das vorstehende beschriebene Verfahren auszuführen.

Das Gerät kann das Verfahren zum Übertragen und/oder das Verfahren zum Empfangen ausführen. In einer bevorzugten Variante ist ein mobiles Endgerät der Sender und ein Haushaltsgerät der Empfänger. Die erfindungsgemäße Datenübertragung kann aber grundsätzlich zwischen beliebigen WLAN-fähigen Geräten ausgeführt werden, beispielsweise zwischen zwei Haushaltsgeräten.

Ein Ausführungsbeispiel der Erfindung ist in den Zeichnungen rein schematisch dargestellt und wird nachfolgend näher beschrieben. Es zeigt
- Figur 1: das Abbilden von Nutzdaten auf QoS-Felder von WLAN-Paketen; und
- Figur 2: das Rekonstruieren von Nutzdaten aus QoS-Feldern von WLAN-Paketen.

Im Folgenden wird der Einfachheit halber das erfindungsgemäße Verfahren mit unverschlüsselten Nutzdaten beschrieben werden. Das Verfahren kann jedoch analog auf verschlüsselte Daten angewendet werden, was aus Sicherheitsgründen bevorzugt ist. Weiterhin wird im Folgenden als Anwendungsbeispiel für Nutzdaten ein WLAN-Zugangsschlüssel beschrieben werden, wobei jedoch auch beliebige Daten mit dem erfindungsgemäßen Verfahren übertragen werden können.

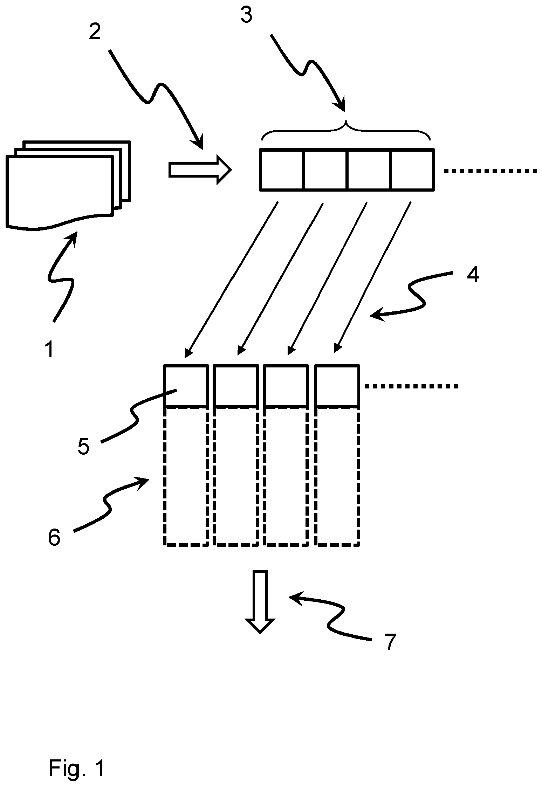

In Figur 1 ist der Sende-Teil des erfindungsgemäßen Verfahrens schematisch dargestellt. Nutzdaten 1, beispielsweise ein WLAN-Zugangsschlüssel, sollen von einem bereits in ein WLAN eingebundenen Sende-Gerät, beispielsweise einem mobilen Endgerät (nicht gezeigt), an ein noch nicht ins (gleiche) WLAN eingebundenes Gerät, beispielsweise ein Haushaltsgerät (nicht gezeigt), übertragen werden. Dazu werden die Nutzdaten 1 einer Kodierung 2 unterzogen, um sie in ein mittels 2 Bit darstellbares Format 3 zu bringen. Als Beispiel kann das UTF-8-Format dienen, das die Zeichen eines WLAN-Zugangsschlüssels wie etwa gemäß WPA2 in 8 Bit bzw. 1 Byte darstellen kann. Diese 8 Bit können einfach in 4x2 Bit aufgeteilt werde, wie durch die Segmentierung angedeutet.

Nicht gezeigt ist hier eine Verschlüsselung, die erfindungsgemäß im Schritt 2 enthalten sein kann. Optional können die Nutzdaten vor dem Kodieren ferner um Präambel, Postambel oder Prüfcode ergänzt werden bzw. diese enthalten.

Die in 2 Bit aufgesplitteten Nutzdaten werden in einem Schritt 4 auf die QoS-Felder 5 von UDP-Datenpaketen 6 abgebildet. Das so genannte ACI-Feld besteht aus 2 Bit, denen die vier Access Categories "Best Effort"=00, "Background"=01, "Video"=10 und "Voice"=11 zugeordnet sind. In dem Datenpaket 6 wird nun dieser Bitwert jeweils so gesetzt, wie es den entsprechenden 2 Bit der Nutzdaten entspricht (oder gemäß einer anderen eineindeutigen Zuordnungsvorschrift).

Um sicherzustellen, dass ein 2 Bit-Nutzdaten-Teil auf exakt ein Paket im WLAN-Protokoll abgebildet wird, werden Datenpakete vom Typ UDP verwendet. Der "normale" Inhalt der Datenpakete ist für die erfindungsgemäße Datenübertragung irrelevant, daher kann dieser beliebig oder auch leer sein, hier gestrichelt dargestellt. Es werden also UDP-Datenpakete mit beliebigem Inhalt und dem entsprechend gesetzten QoS-Feld erzeugt. Diese UDP-Pakete werden dann in Schritt 7 über eine WLAN-Schnittstelle versendet.

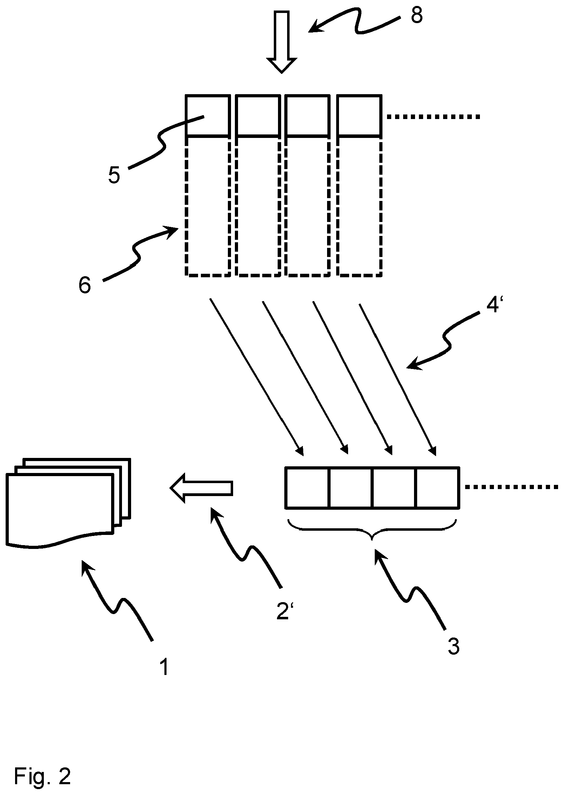

In Figur 2 ist der Empfangs-Teil des erfindungsgemäßen Verfahrens schematisch dargestellt. Ein (nicht dargestelltes) WLAN-fähiges Gerät, beispielsweise ein Haushaltsgerät, lauscht auf WLAN-Datenpakete 6 mit vorhandenem QoS- bzw. ACI-Feld 5. Das empfangende Gerät kann nicht ohne Weiteres erkennen, ob in ankommenden WLAN-Datenpaketen erfindungsgemäß Nutzdaten enthalten sind, oder ob es sich überhaupt um UDP-Pakete handelt. Ein Indiz für WLAN-Datenpakete, die gemäß dem erfindungsgemäßen Verfahren versendet wurden, ist jedoch ein sich veränderndes QoS-Feld.

Das empfangende Gerät wertet den 2 Bit-Inhalt des QoS-Felds aus bzw. setzt entsprechend aus den 2 Bit-Anteilen einen Datenstrom zusammen. Um in dem gleichen Beispiel wie bezüglich Fig. 2 zu bleiben werden Bytes 3 aus je 4x2 Bit der QoS-Felder zusammengesetzt (Schritt 4') und daraus ein UTF-8-Zeichen dekodiert (Schritt 2'). Da das empfangende Gerät jedoch nicht wissen kann, an welcher Stelle des Datenstroms das jeweilige Byte anfängt bzw. aufhört, ist es bevorzugt, dass die Nutzdaten auf der Senderseite mit einer Präambel oder einer Postambel versehen werden. Das Empfangsgerät kann in dem aus den 2-Bit-Anteilen zusammengesetzten Datenstrom Präambel und/oder Postambel erkennen und entsprechend das Dekodieren der Nutzdaten aus den 2-Bit-Anteilen steuern.

Aus den zusammengesetzten und dekodierten Daten werden schließlich die ursprünglichen Nutzdaten 1 zurückgewonnen. Analog zu dem Sende-Teil von Fig. 1 kann der Schritt des Dekodierens ein Entschlüsseln verschlüsselter Nutzdaten beinhalten.

## Patentansprüche

1. Verfahren zur direkten Datenübertragung zu WLAN-fähigen Geräten, umfassend:
- Kodieren von zu übertragenden Nutzdaten in einem auf 2 Bit basierenden Format;
- Erzeugen von je einem UDP-Datenpaket pro 2 Bit der kodierten Daten, wobei die UDP-Datenpakete eine QoS-Anforderung aufweisen, deren 2 Bit entsprechend der kodierten 2 Bit gesetzt werden; und
- Senden der erzeugten UDP-Datenpakete über eine WLAN-Schnittstelle.

2. Verfahren nach Anspruch 1, wobei der Schritt des Kodierens ein Verschlüsseln der Nutzdaten umfasst.

3. Verfahren nach Anspruch 1 oder 2, wobei die zu übertragenden Nutzdaten eines oder mehrere der folgenden enthalten:
- eine definierte Präambel;
- eine definierte Postambel; und
- einen Prüfcode.

4. Verfahren nach einem der vorhergehenden Ansprüche, wobei die zu übertragenden Nutzdaten einen WLAN-Zugangsschlüssel enthalten.

5. Verfahren gemäß Anspruch 4, wobei in den Nutzdaten eine Kennung eines Access-Points enthalten ist.

6. Verfahren zum Empfangen von Daten in einem WLAN-fähigen Gerät, umfassend:
- Empfangen von Datenpaketen über eine WLAN-Schnittstelle, die eine QoS-Anforderung aufweisen; und
- Erzeugen von Nutzdaten durch Zusammensetzen der 2 Bit der QoS-Anforderungen der Datenpakete und Dekodieren der zusammengesetzten Daten.

7. Verfahren nach Anspruch 6, wobei das Dekodieren ein Entschlüsseln der zusammengesetzten Daten umfasst.

8. Verfahren nach Anspruch 6 oder 7, wobei die empfangenen Daten eines oder mehrere der folgenden enthalten:
- eine Präambel;
- eine Postambel; und
- einen Prüfcode;
wobei beim Zusammensetzen und/oder Dekodieren die Präambel, Postambel oder der Prüfcode berücksichtigt werden.

9. Verfahren nach einem der vorhergehenden Ansprüche 6 bis 8, wobei die Nutzdaten einen WLAN-Zugangsschlüssel umfassen, weiter umfassend:
- Herstellen einer WLAN-Verbindung des Haushaltsgeräts mit einem Access-Point unter Verwendung des WLAN-Zugangsschlüssels.

10. Verfahren nach Anspruch 9, wobei die Nutzdaten eine Kennung eines Access-Points umfassen und wobei die WLAN-Verbindung mit dem Access-Point hergestellt wird, der durch die Kennung angegeben wird.

11. Gerät, umfassend eine WLAN-Schnittstelle und eine Steuereinheit, die dazu eingerichtet ist, das Verfahren nach einem der Ansprüche 1 bis 10 auszuführen.
